# EUROPEAN PATENT APPLICATION

(11) **EP 1 918 133 A1**
(43) Date of publication of application: **07.05.2008**
(21) Application number: 06022591.9
(22) Date of filing: 30.10.2006
(51) Int. Cl.: B60C 27/02

(54) **Anti-skid device with traction elements hooked on rim edges**

(71) Applicant: Varesano, Vincenzo, 13816 Sagliano Micca BI (IT)
(72) Inventor: Varesano, Vincenzo, 13816 Sagliano Micca BI (IT)
(74) Representative: Lotti, Giorgio

(57) **Abstract**

In an assembly constituted by antiskid devices for vehicle wheels and by the corresponding rim the antiskid devices are formed by a plurality of plates (10, 10'), designed to reproduce the surface of the tyre (9) and provided with means (8, 8') projecting from their surface, said means being designed to ensure gripping on the snow; the plates are moreover provided laterally with means for engagement (16, 16') in a releasable way to edges (22) of the inner surface and outer surface of the rim (21) .

## Description

The subject of the present invention is an assembly constituted by antiskid devices for vehicle wheels and corresponding rim. There currently exist many types of chains for vehicles, but one of the main drawbacks of all the chains currently available on the market lies in the fact that they are far from practical to install and remove.

In fact, in itself the chain is an accessory that does not present any difficulties from the constructional standpoint and, in one way or another, all the ones currently available on the market serve their purpose once installed.

However, they present the serious drawback referred to above, and the various manufacturers are currently concentrating their efforts in rendering them easy and fast to install and remove. In fact, anybody who has had to install chains on wheels has probably ended up getting his hands, arms, and clothes all dirty, and frequently without even managing to install the chain properly, because its engagement ends are practically inaccessible, above all on the inner side of the rim, or else because it has been necessary to move the car during installation, and consequently the part of chain already applied to the wheel falls off again. According to the model of chain, the above and many other problems may be encountered during installation. Even when the operations of installation and removal seem to be going on successfully, a problem of some sort arises, so that, when the chain has finally been installed or removed, the user has managed to get smeared with slush, mud, and grease.

The purpose of the present invention is to propose an assembly constituted by antiskid devices for vehicle wheels and corresponding rim whereby the antiskid devices (chains) can be installed and removed with extreme ease and rapidity by anybody, even the most unskilled person, and without running any risk of him getting his hands, arms, and clothing all filthy.

To achieve the above and further purposes that will be better understood hereinafter, the invention proposes an assembly constituted by antiskid devices for vehicle wheels and corresponding rim, characterized in that the antiskid devices are a plurality of plates, designed to reproduce the surface of the tyre and provided with means projecting from their surface designed to provide grip on the snow, the plates being moreover provided laterally with means for engaging in a releasable way to edges of the inner surface and outer surface of the rim.

The assembly will now be described in a preferred embodiment thereof with reference to the attached plate of drawings, in which:
Figure 1 illustrates a first preferred embodiment of the assembly according to the invention installed on the wheel of a vehicle;
Figure 2 illustrates the device for engagement of the chain to the rim, according to a first embodiment of the invention;
Figure 3 illustrates the device for engagement of the chain to the rim, according to a second embodiment of the invention;
Figure 4 and 5 illustrate the device of the rim to which the chain of Figure 1 is engaged by means of the engagement devices according to Figures 2 and 3; and
Figures 6 and 7 illustrate a second preferred embodiment of the assembly in a free and non-installed configuration and in a configuration where it is installed on the rim, respectively; and
Figure 8 illustrates, at an enlarged scale, a detail of the device for engagement to the rim of the assembly of Figures 6 and 7.

The antiskid device proper is advantageously constituted by a plate 10 having a substantially rhomboidal shape and a curvature such as to reproduce that of the tyre 9 on which it is applied.

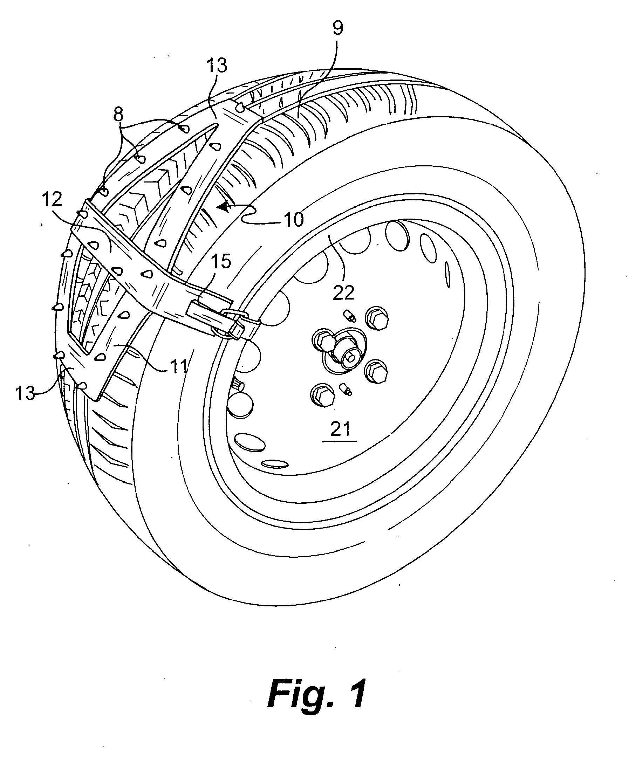

In Figure 1 the plate is constituted by strips 11, which are oblique with respect to the surface of the tyre and are joined together by three strips, namely, a central one 12 and two end ones 13, that are parallel to the axis of the wheel, but it is understood that the shape and dimensions of the plate may vary according to the type and the dimensions of the tyre and the adherence that the device is to exert on the snow.

As may be noted in Figure 1, the plate is provided with projections 8, which are the ones that are to grip in the snow; the dimensions of the projections and their distribution along the plate are elements that depend upon various factors (dimensions of the tyre and of the plates), so that the ones illustrated are provided purely by way of example.

Figure 1 illustrates, for reasons of simplicity, just one plate, but it is understood that three or four of them may be applied, or any other number according to the dimensions of the plates themselves and the dimensions of the tyre. Tests conducted would appear to indicate that the right number is of plates is three, appropriately sized.

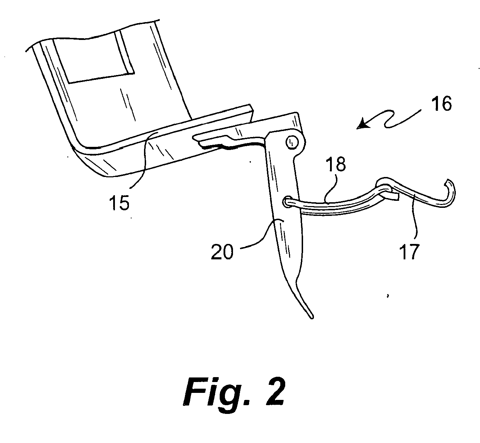

The transverse central strip 12 extends beyond the plate at the two sides, with appendages 15 that carry respective toggle-action engagement means 16. In the embodiment of Figure 2, the engagement means 16 are constituted by the hook 17, which is hinged to a ring 18, which is, in turn, hinged to a lever 20, hinged to the appendage 15.

Applied on the rim 21 of the wheel is an edge 22, which forms a circular seat in which the hook 17 comes to be housed.

The engagement means 16 are applied also on an appendage 15 that extends on the other side of the plate, as likewise the edge 22 is applied also on the inner side of the rim 21. In this way, after resting the plate 10 on the tyre, the user engages the hook 17 to the edge of the rim on its inner side, i.e., the one facing the wheel hub, and, by rotating the lever 20 towards the plate 10, clamps the latter provisionally on the inner side of the rim 21, after which he carries out the same operation on the outer side of the rim, thus clamping definitively the plate on the tyre 9.

The edges 22 applied on the rim 21, on the outer side and on the inner side, can be forged during fabrication of the rim, or else can be welded subsequently, in particular in the case of steel rims.

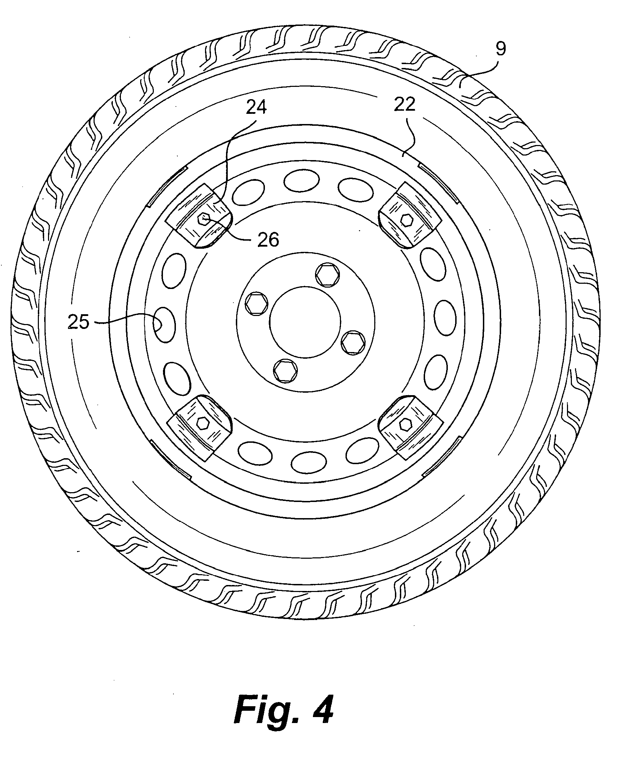

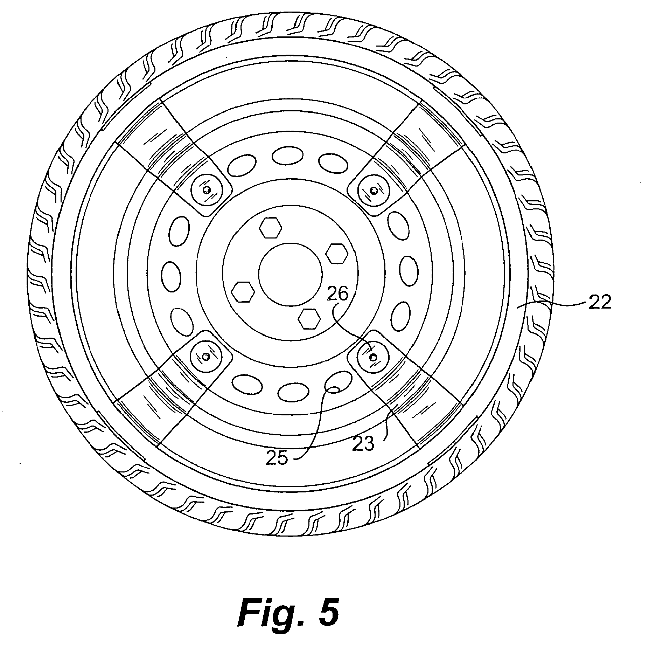

Alternatively, they can be applied in a removable way, as is, for example, illustrated in Figures 4 and 5, where it may be noted that the two edges 22, one for the outside of the wheel and the other for the inside thereof, carry fixed thereto respective (four) plates 23 (for the inside) and 24 (for the outside), which extend radially towards the axis of the wheel following the contour of the rim.

In positions corresponding to the traditional holes 25 in the rim, a bolting system 26 (not described given that it is of a known type) renders fixed with respect to one another each external plate 24 with the respective internal plate 23, forcing the edges 22 against the respective faces of the rim.

In this way, the edges 22 that form the seats for the hooks 17 can be removed during the summer season.

Consequently, if the edges 22 are obtained by forging, it will be up to the manufacturers to provide rims, even ones made of light alloy, with the above characteristics such as to enable application thereon of the plates 10 described previously, which will hence be sold together with the rims thus pre-arranged or separately so as to be installable on said rims.

Alternatively, the edges 22 may be welded on already existing rims and hence remain mounted thereon permanently, for example, in the case of heavy vehicles (lorries) or in the case of steel rims that to not present a particularly high aesthetic quality.

Finally, as has been seen, removable edges 22 may be envisaged in the case where the user wishes to have the wheels configured only for the current season or in the case where it is desired to sell the assembly as a complete kit.

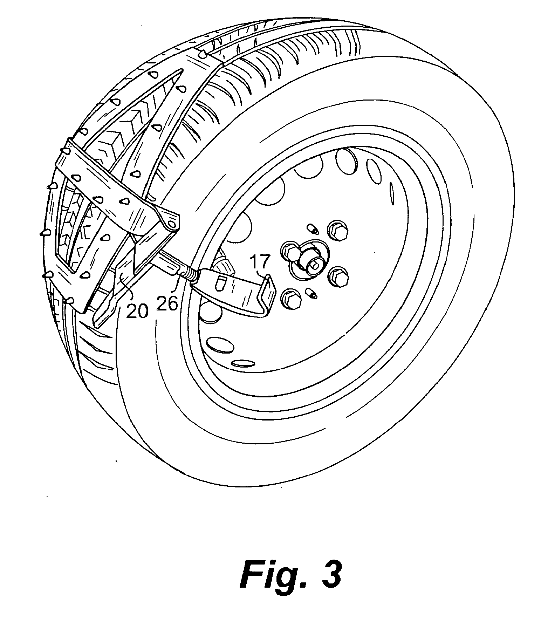

In the latter case, there is also the possibility of providing the engagement means 16 in such a way that they are adjustable, as may be seen in Figure 3. In this case, the hook 17 is screwed on a threaded pin 26 hinged to the lever 20.

In this way, by screwing or unscrewing the two hooks 17 on the respective pin 26, the distance between the two hooks 17 is shortened or lengthened so as to enable use of the same plates 10 on wheels of different dimensions.

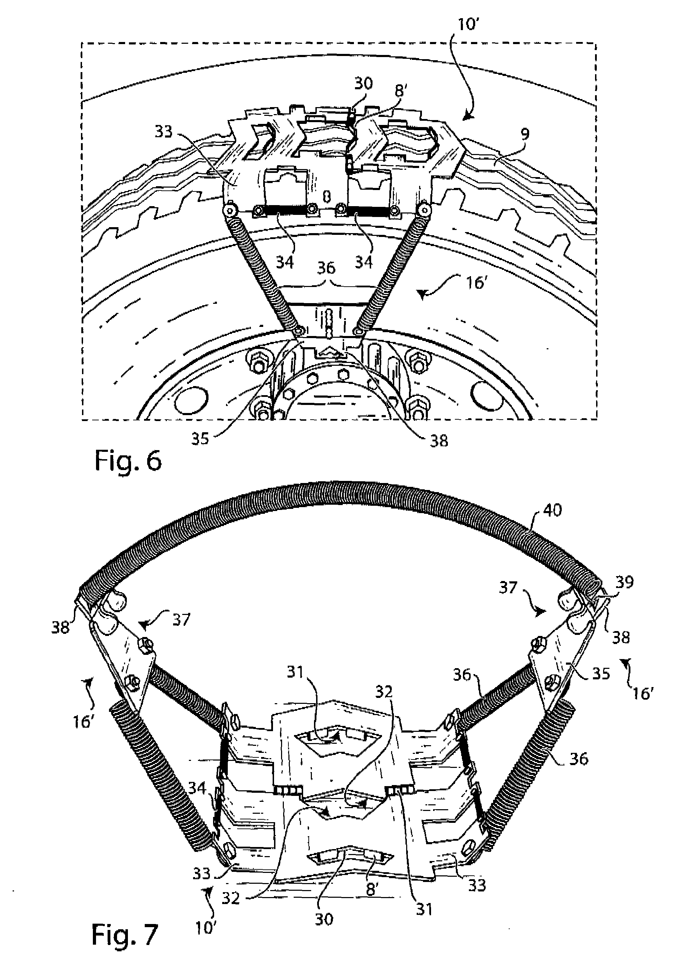

Figures 6 and 7 illustrate a preferred alternative embodiment of an antiskid device for vehicle wheels and a corresponding rim, which differs from the device previously described in that it comprises a plurality of plates 10', just one of which is illustrated, each of which is designed to reproduce the surface of the tyre 9 and is provided with projections 8', which are the ones that are to grip the snow. Also in this case, the dimensions of the projections and their distribution along the plate are elements that depend upon various factors.

Each plate 10' comprises two anchor-shaped engagement means 16' set on opposite sides of the plate 10' , and is defined by two half-plates 10'a hinged to one another along a hinge 30 to enable better adaptation to the surface of the tyre 9.

Each half-plate 10' is provided with a respective eyelet 31 set in a position corresponding to the projections 8' to facilitate fabrication of the projections 8' themselves, and is also provided with a respective half-eyelet 32 delimited towards the other half-plate 10'a by the axis of the hinge 30 set parallel to the axis of the tyre 9. Each plate 10' is provided, along each side, with three fingers 33 bent to form an L so as to follow the corresponding shoulder of the tyre 9, and of which the external fingers 33 are connected to the intermediate finger 33 by means of respective springs 34 designed to exert an elastic action of approach between the fingers themselves to increase even further adherence of the plates 10' to the tyre 9.

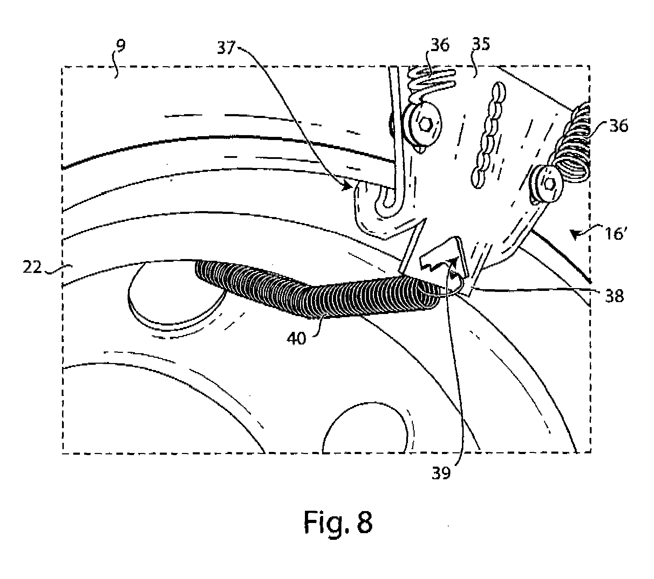

In the embodiment of Figure 6 and 7, and as is illustrated more clearly in Figure 8, the engagement means 16' are constituted by a plaque 35 connected to the fingers 33 by means of two springs 36, which are designed to be set up against the side wall of the tyre 9, and by an anchor 37, which is designed to be housed in the circular seat provided by the corresponding edge 22.

The engagement means 16' moreover have a perforated tab 38, which projects beyond the anchor 37 in a position coplanar with the plaque 35 and is provided with a through hole 39.

In positions corresponding to the traditional holes 25 of the rim a further spring 40 renders fixed with respect to one another each internal plaque 35 with the respective external plaque 35, forcing the anchors 37 up against the edges 22, and, in the case where the latter are made in a removable way as described above, forcing also these against the respective faces of the rim.

Installation of the antiskid device of Figures 6, 7 and 8 is carried out by arranging the plates 10' on the tread of the tyre 9, throwing the internal plaque 35 beyond the inner shoulder of the tyre 9, and pulling it, subsequently, towards the outside so as to cause engagement of the anchor 37 in the edge 22, and anchoring the anchor 37 of the external plaque 35 to the corresponding edge 22. At this point, it will be sufficient to pass the spring 40 through a hole 25 until it is hooked in the tab 38 of the internal plaque 35, and then hook the other end of the spring 40 to the tab 38 of the internal plaque 35.

The above operation must be repeated for each plate 10' of which the antiskid device is made up, and, we recall, said device can be defined even by three plates 10' distributed around the axis of the rim.

## Claims

1. An assembly constituted by antiskid devices for vehicle wheels and corresponding rim, **characterized in that** the antiskid devices are a plurality of plates (10, 10'), designed to reproduce the surface of the tyre (9) and provided with means (8, 8') projecting from their surface, which are designed to provide grip on the snow, the plates being moreover provided laterally with means for engagement (16, 16') in a releasable way to edges (22) of the inner surface and outer surface of the rim (21).

2. The assembly according to Claim 1, **characterized in that** the plates (10, 10') for each tyre are three in number, set at equal distances apart from one another.

3. The assembly according to Claim 1 or Claim 2, **characterized in that** the plates (10) have a substantially rhomboidal shape and are made up of strips (11), which are oblique with respect to the surface of the tyre and are joined by three strips, namely, a central one (12) and two end ones (13), which are parallel to the axis of the wheel.

4. The assembly according to Claim 3, **characterized in that** the engagement means (16) are toggle-action engagement means carried by appendages (15) that extend from the transverse central strip (12) of the plate to its two sides.

5. The assembly according to Claim 4, **characterized in that** the engagement means (16) are constituted by a hook (17), which is hinged to a ring (18), which is, in turn, hinged to a lever (20), hinged to the appendage (15).

6. The assembly according to Claim 5, **characterized in that** said edge (22) of the rim (21) forms a circular seat in which the hook (17) comes to be housed.

7. The assembly according to Claim 1, **characterized in that** the edges (22) on the rim (21) are forged during fabrication of the rim.

8. The assembly according to Claim 1, **characterized in that** the edges (22) on the rim (21) are welded on the pre-existing rim.

9. The assembly according to Claim 1, **characterized in that** the edges (22) on the rim (21) are applied in a removable way.

10. The assembly according to Claim 9, **characterized in that** the edges (22) on the rim (21), one on the outside of the wheel and the other on the inside thereof, carry fixed thereto respective plates (23 and 24), which extend radially towards the axis of the wheel following the contour of the rim; in positions corresponding to the traditional holes (25) of the rim a bolting system (26) rendering each external plate (24) and the respective internal plate (23) fixed with respect to one another, forcing the edges (22) against the respective faces of the rim.

11. The assembly according to Claim 4, **characterized in that** the engagement means (16) are constituted by a hook (17) screwed on a threaded pin (26) hinged to a lever (20), which is in turn hinged to the appendage (15).

12. The assembly according to Claim 1 or Claim 2 or else any one of Claims 7 to 11, **characterized in that** the plates (10') are designed to reproduce the surface of the tyre (9) and are defined by two half-plates (10'a) hinged to one another along a hinge (30) to adapt better to the surface of the tyre (9) itself.

13. The assembly according to Claim 12, **characterized in that** each half-plate (10'a) has a respective eyelet (31) set in a position corresponding to the projections (8') and a respective half-eyelet (32) delimited towards the other half-plate (10'a) by the axis of the hinge (30), said axis (30) being set parallel to the axis of the tyre (8).

14. The assembly according to Claim 13, **characterized in that** each plate (10') is provided, along each side, with three fingers (33) bent to form an L to follow the corresponding shoulder of the tyre (9), and of which the external fingers (33) are connected to the intermediate finger (33) by means of respective springs (34), which are designed to exert an elastic action of approach between the fingers (33) themselves to increase even further adherence of the plate (10') to the tyre (9).

15. The assembly according to Claim 14, **characterized in that** the engagement means (16') comprise, for each side of the plate (10'), a plaque (35) connected to the fingers (33) by means of two springs (36), which are designed to be set up against the side wall of the tyre (9), and by an anchor (37) designed to be anchored in the corresponding edge (22).

16. The assembly according to Claim 15, **characterized in that** the engagement means (16') moreover have, for each side of the plate (10'), a perforated tab (38), which projects beyond the anchor (37) in a position coplanar with the plaque (35), and is provided with a through hole (39).

17. The assembly according to Claim 16, **characterized in that** the engagement means (16') comprise a further spring (40) designed to be set passing through a rim to render each internal plaque (35) fixed with respect to the corresponding external plaque (35).
